# EUROPEAN PATENT APPLICATION

(11) **EP 4 746 463 A1**
(43) Date of publication of application: **20.05.2026**
(21) Application number: 24212624.1
(22) Date of filing: 13.11.2024
(51) Int. Cl.: H04W 4/90, H04W 4/48, H04W 76/50

(54) **MAKING AN EMERGENCY COMMUNICATION IN A VEHICLE**

(71) Applicant: Valeo Comfort and Driving Assistance, 94000 Créteil (FR)
(72) Inventor: WASFEY, Bishoy, 94000 Créteil (FR); NABIL, Mohammad, 94000 Créteil (FR)
(74) Representative: Delaval, Guillaume Laurent

(57) **Abstract**

The disclosure notably relates to a computer-implemented method for making an emergency communication in a vehicle. The method comprises, by an In-vehicle Infotainment (IVI) unit of the vehicle, determining whether a Telematic Contril Unit (TCU) of the vehicle made an emergency communication upon detection of an emergency of the vehicle. The TCU and the IVI unit are both configured for detection of the emergency. The method further comprises, if the IVI unit determines that the TCU did not make an emergency communication upon detection of the emergency, triggering, by the IVI, a backup emergency communication. This constitutes an improved solution for making an emergency communication in a vehicle.

## Description

### TECHNICAL FIELD

The disclosure relates to the field of computer programs and systems, and more specifically to a method, system and program for making an emergency communication in a vehicle.

### BACKGROUND

Nowadays, some vehicles are equipped with an emergency communication system, for example an emergency call, or "eCall", system, to make an emergency communication (*e.g*. an emergency call) in case of an emergency, such as an accident. When an accident triggers the eCall system, it initiates a call to an emergency service provider. The eCall system may be embedded in the TCU (Telematic Control Unit) of the vehicle. However, sometimes, the eCall is not initiated due to failure in the eCall system or TCU due to a software and/or hardware problem in the TCU that prevents the call from launching. Failure may also be caused by bad cellular coverage.

There is thus a need for improved solutions for making an emergency communication in a vehicle.

### SUMMARY

It is therefore provided a computer-implemented method for making an emergency communication in a vehicle. The method comprises, by an In-vehicle Infotainment (IVI) unit of the vehicle, determining whether a Telematic Contril Unit (TCU) of the vehicle made an emergency communication upon detection of an emergency of the vehicle. The TCU and the IVI unit are both configured for detection of the emergency. The method further comprises, if the IVI unit determines that the TCU did not make an emergency communication upon detection of the emergency, triggering, by the IVI, a backup emergency communication.

The method may comprise one or more of the following:
- the determining, by the IVI unit, of whether the TCU of the vehicle made the emergency communication comprises:
   ∘ determining whether a notification of emergency communication success from the TCU or a notification of emergency communication failure from the TCU has been received by the IVI unit;
- the triggering, by the IVI, of the backup emergency communication takes place after a timeout upon determination that the TCU did not make the emergency communication;
- the triggering, by the IVI unit, of the backup emergency communication comprises:
   ∘ by the IVI unit, performing the backup emergency communication; or
   ∘ by the IVI unit, sending instructions to a user device connected to the IVI unit, the instructions causing the user device to perform the backup emergency communication;
- the method further comprises:
   ∘ by the user device, determining whether the TCU made the emergency communication or whether the IVI unit triggered the backup emergency communication; and
   ∘ if the user device determines that the TCU did not make the emergency communication and that the IVI unit did not make the backup emergency communication, performing, by the user device, the backup emergency communication, wherein the user device is configured to detect on its own the emergency;
- the determining, by the user device, of whether the TCU made the emergency call or whether the IVI unit triggered the backup emergency call comprises:
   ∘ determining whether a notification of emergency communication success from the TCU has been received by the user device; and
   ∘ determining whether instructions from the IVI unit to perform the backup emergency communication have been received by the user device;
- the performing, by the user device, of the backup emergency communication takes place after a timeout upon determination that the TCU did not make the emergency communication and that the IVI unit did not make the backup emergency communication;
- the determining, by the user device, of whether the TCU made the emergency call or whether the IVI unit triggered the backup emergency call further comprises, after the timeout, by the user device and prior to performing the backup emergency communication, sending a request to the vehicle to confirm if the emergency situation is still present; and/or
- the performing, by the user device, of the backup emergency communication further comprises displaying, on the user device and on the IVI unit, a backup emergency communication starting notification, wherein the user device is configured for cancelling the backup emergency communication upon request of a vehicle passenger after display of the backup emergency communication starting notification on the IVI unit and the user device.

It is also provided first a computer program comprising instructions which, when executed by an IVI unit of a vehicle, cause the IVI to perform the steps of determining whether the TCU made an emergency communication and of triggering the backup emergency communication according to the method.

It is also provided a second computer program comprising instructions which, when executed by a user device connected to an IVI unit of a vehicle, cause the user device to perform the steps of determining whether the TCU made the emergency communication or whether the IVI unit triggered the backup emergency communication and of performing the backup emergency communication according to the method.

It is also provided a computer-readable data storage medium having recorded thereon the first computer program.

It is also provided a computer-readable data storage medium having recorded thereon the second computer program.

It is also provided a vehicle IVI unit comprising a processor and a memory, the memory having recorded thereon the first computer program.

It is also provided a vehicle equipped with the vehicle IVI unit.

It is also provided a user device connectable to the vehicle IVI unit, the user device comprising a processor and a memory, the memory having recorded thereon the second computer program.

### BRIEF DESCRIPTION OF THE DRAWINGS

Non-limiting examples will now be described in reference to the accompanying drawings, where:
- FIG.s 1 and 2 illustrate the method.

### DETAILED DESCRIPTION

The present disclosure concerns a computer-implemented method for making an emergency communication in a vehicle. The method comprises, by an In-vehicle Infotainment (IVI) unit of the vehicle, determining whether a Telematic Contril Unit (TCU) of the vehicle made an emergency communication upon detection of an emergency of the vehicle. The TCU and the IVI unit are both configured for detection of the emergency. The method further comprises, if the IVI unit determines that the TCU did not make an emergency communication upon detection of the emergency, triggering, by the IVI, a backup emergency communication. This constitutes an improved solution for making an emergency communication in a vehicle.

Notably, the method allows the IVI unit of the vehicle to make detection of whether the TCU made an emergency communication upon detection of an emergency of the vehicle. Specifically, both the IVI unit (sometimes referred to simply as "IVI") and the TCU are configured to detect an emergency (*e.g.* an accident), *i.e.* independently from each other. Normally, the TCU is the unit entrusted with the task of making the emergency communication (eCall for example). The method enables the IVI to check whether the TCU did make the communication, both devices being connected, and if not, to trigger an emergency communication. This allows the emergency communication to be made by the IVI (as a backup emergency communication) in the event it detects that the TCU did not make the communication. It is to be understood that such situation may occur in case of an actual failure of the TCU (*e.g*. caused by an accident) which prevents it to make the communication, or in case of failure (*e.g*. due to wire connection damage or communication failure between TCU and IVI) to detect, on the IVI side, confirmation that the TCU made the communication even if it may have made it. In both cases, the IVI unit triggers a backup emergency communication, which ensures that communication of the emergency is sent to the appropriate operator. The method thereby increases safety of the vehicle by allowing faster response to the emergency.

As further discussed hereinafter, the IVI may either perform directly the backup emergency communication or may instead send instructions to a user device to cause that user device to perform the backup emergency communication. As also further discussed hereinafter, the user device may also detect the emergency on its own and may also perform detection of whether the TCU and/or the IVI did make the emergency communication/backup emergency communication. In case the user device detects that such communication was not made (either because of an actual IVI and/or TCU failure or because, for any reason, no positive confirmation of such communication was received), the user device can make on its own the backup emergency communication. This provides yet another level of safety.

The method is for making an emergency communication in a vehicle. This means that, upon detection of an emergency of the vehicle (by any of the devices mentioned above), the method results in making an emergency communication. This communication is either the standard emergency communication sent by the TCU, or the backup communication triggered by the IVI unit (*i.e*. triggered directly by the IVI unit). The vehicle is any vehicle, such as a car, a bus or a truck, or the like. The emergency communication or backup emergency communication may be an eCall, or any other type of communication (*e.g*. a notification, beacon or text sent to an emergency operator)

The vehicle comprises the TCU. "TCU" stands for "Telematic Contril Unit". The TCI is an embedded system on board a vehicle that wirelessly connects the vehicle to cloud services or other vehicles, for example via V2X standards over a cellular network. The TCU collects telemetry data from the vehicle, such as position, speed, engine data, and/or connectivity quality, from various sub-systems over data and control busses. It may also provide in-vehicle connectivity via Wifi and Bluetooth. The TCU may be connected (*e.g*. via a wired connection) to various sensors in the vehicle to detect an emergency (*e.g*. an accident). These sensors may include one or any communication of: airbag, SOS button, rollover sensor, and/or driver monitoring system. The TCU implements the emergency communication function (referred to as "eCall" function when the communication is a call) upon detection of an emergency by these sensors. The TCU may include (*e.g*. consist of):
- A satellite navigation (GNSS) unit, which keeps track of the latitude and longitude values of the vehicle;
- An external interface for mobile communication (GSM, GPRS, Wi-Fi, WiMax, LTE or 5G), which provides the tracked values to a centralized geographical information system (GIS) database server;
- An electronic processing unit;
- A microcontroller, microprocessor, or field programmable gate array (FPGA) which processes the information and acts as an interface to the GPS;
- A mobile communication unit;
- Memory for saving GPS values in mobile-free zones or to intelligently store information about the vehicle's sensor data; and
- A battery module.

The vehicle also comprises an IVI unit. "IVI" stands for "In-vehicle Infotainment". The IVI unit is a collection of hardware and software in the vehicle that provides audio or video entertainment. It may also include automotive navigation systems, video players, USB and Bluetooth connectivity, carputers, in-car internet, and WiFi. The IVI may be controlled by simple dashboards knobs and dials, or may include steering wheel audio controls, handsfree voice control, touchsensitive preset buttons, and even touch screens on higher-end units. The IVI may be equipped with rear-view cameras along with side cameras for better safety. The IVI unit may be connected (with a wired connection for example) to the above-mentioned sensors and to the TCU (with a wired or wireless connection).

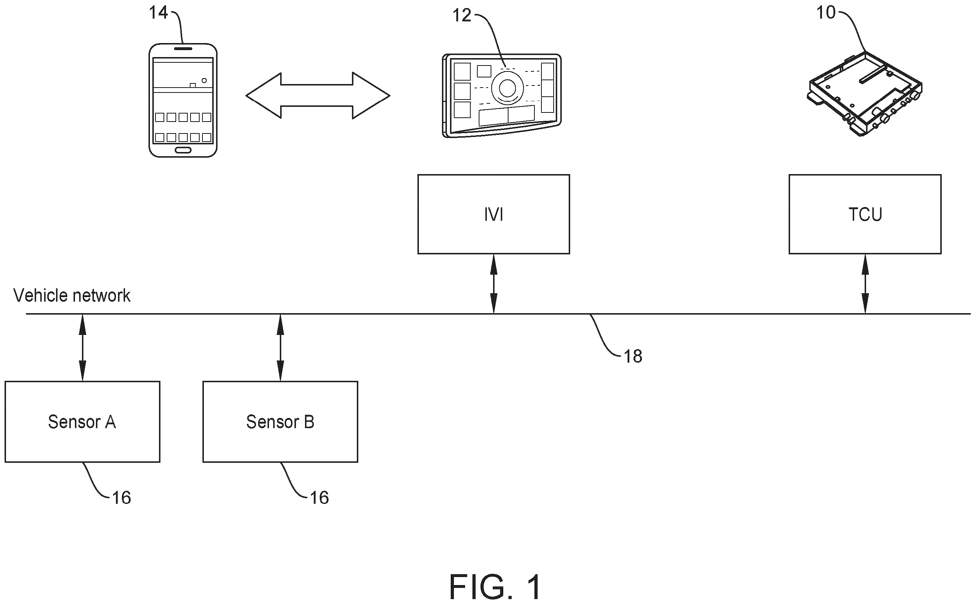

FIG. 1 shows a schematic illustration of the vehicle on-board system. The system comprises the TCU 10, the IVI 12, wire-connected by the wired connection 18 of the vehicle network to the sensors 16. The user device 14 is also shown and will be further discussed hereinafter.

The steps of the method are now further discussed. It is to be understood that these steps are performed shortly after (*e.g*. substantially instantaneously after, or a few seconds after) detection of an emergency (*e.g*. accident) by the sensors. The method may in fact comprise an initial step of, by the sensors, detection of the emergency, for example consisting in detecting data representative of the emergency and sending these data to the TCU and the IVI. Then, the method may comprise, by both the TCI and IVI, processing these data to detect the emergency.

The method may comprise, by the TCU, upon detection of the emergency, attempting to make the emergency communication. If the attempt is successful, the method may comprise, by the TCU, sending an emergency communication success notification to the IVI unit. If the attempt is not successful, the method may comprise, by the TCU, sending an emergency communication failure notification to the IVI unit.

Next, the method comprises, by the IVI unit, determining whether the TCU made the emergency communication upon detection of an emergency of the vehicle. This may happen upon detection, by the IVI unit, of the emergency by processing the data sent by the sensors. The determining, by the IVI unit, of whether the TCU of the vehicle made the emergency communication may comprise determining whether the notification of emergency communication success from the TCU or the notification of emergency communication failure from the TCU has been received by the IVI unit.

The method then comprises, if the IVI unit determines that the TCU did make the emergency communication, for example if the IVI unit determines that it received the emergency communication success notification sent by the TCU, ending the method on the IVI unit side. In other words, the IVI unit does not perform any further step and the method ends with the TCU making the emergency communication.

On the other hand, the method comprises, if the IVI unit determines that the TCU did not make the emergency communication, triggering, by the IVI, a backup emergency communication. Determining that the TCU did not make the emergency communication may comprise, by the IVI, determining that it received the emergency communication failure notification sent by the TCU, or determining that no notification was received by the IVI. This means that the IVI considers, in absence of any notification, that it must trigger the backup emergency communication. This increases safety, as the absence of any notification may mean that the TCU made the communication but a failure occurred in transmitting the success notification to the IVI, but may also mean that the TCU failed to made the communication. Thus, worst case scenario, the IVI triggers a backup emergency communication in addition to the emergency communication made by the TCU, and in case the TCU failed, the IVI ensures triggering of a backup communication. Safety is thus improved.

The triggering, by the IVI, of the backup emergency communication may take place after a timeout (*e.g*. of a few seconds) upon determination that the TCU did not make the emergency communication. This timeout allows to ensure that the backup communication must indeed be triggered, so as to reduce the occurrences of cases where it would be unnecessarily triggered (because the TCU already made an emergency communication).

The triggering, by the IVI unit, of the backup emergency communication may comprise:
- by the IVI unit, performing the backup emergency communication; or
- by the IVI unit, sending instructions to a user device connected to the IVI unit, the instructions causing the user device to perform the backup emergency communication.

Specifically, if the IVI is configured to perform an emergency communication, the triggering, by the IVI unit, of the backup emergency communication may comprise:
- by the IVI unit, attempting to perform the backup emergency communication; and
- if the attempt was unsuccessful, by the IVI unit, sending instructions to the user device connected to the IVI unit, the instructions causing the user device to perform the backup emergency communication.

If the IVI is not configured to perform an emergency communication, the triggering, by the IVI unit, of the backup emergency communication may simply comprise, by the IVI unit, sending instructions to the user device connected to the IVI unit, the instructions causing the user device to perform the backup emergency communication.

The user device may be any user device configured to be connected to the IVI, either by a wire connection, or by a wireless connection such as Wifi or Bluetooth. The user device may for example be a smartphone or a connected watch. An example of user device 14 is illustrated on FIG. 1. The user device may be configured to perform on its own detection of the emergency. For example, the user device may comprise internal sensors configured for such detection and an internal computer system configured for processing the data obtained by the sensors and determining whether these data indicate occurrence of the emergency. Such sensors may comprise any sensors configured for detection of sudden speed change and/or vibrations and/or any other unusual phenomenon. The method may comprise this step of, by the user device, detecting the emergency, independently from the detection made by the TCU and/or the IVI.

The method may further comprise, by the user device, determining whether the TCU made the emergency communication or whether the IVI unit triggered the backup emergency communication. This may comprise:
- determining whether a notification of emergency communication success from the TCU or the IVI has been received by the user device (the TCU may send such notification to both the IVI and the user device, which may be wire-connected or wirelessly connected to the TCU, for example through the IVI); and
- determining whether instructions from the IVI unit to perform the backup emergency communication have been received by the user device.

The method may then further comprise, if the user device determines that the TCU did not make the emergency communication and that the IVI unit did not make the backup emergency communication, performing, by the user device, the backup emergency communication, wherein the user device is configured to detect on its own the emergency. Determining that the TCU did not make the emergency communication and that the IVI unit did not make the backup emergency communication may comprise determining that a communication failure notification or no notification has been received from the TCU and that a communication failure notification or no notification has been received from the IVI. It is to be understood that the user device may in some examples not be connected to the TCU and only be connected to the IVI, in which case notifications from the TCU are not awaited by the user device and not accounted for by this device. If the user device determines that an emergency communication success notification has been received, either from the TCU or the IVI, the user device does not perform the backup communication.

It is also to be understood that the user device may perform the backup communication anyway regardless of whether it received a notification as indicated above, in cases where the user device receives instructions from the IVI to perform the communication, notably in cases where the IVI cannot perform the notification and uses the user device to do it. In these cases, the performing, by the user device, of the backup emergency communication may take place substantially upon reception of the instructions from the IVI.

The performing, by the user device, of the backup emergency communication may take place after a timeout (*e.g*. of a few seconds) upon determination that the TCU did not make the emergency communication, and that the IVI unit did not make the backup emergency communication. This timeout allows to ensure that the backup communication must indeed be triggered by the user device, so as to reduce the occurrences of cases where it would be unnecessarily triggered (because the TCU or the IVI already made an emergency communication).

The determining, by the user device, of whether the TCU made the emergency call or whether the IVI unit triggered the backup emergency call further comprises, after the timeout, by the user device and prior to performing the backup emergency communication, sending a request to the vehicle to confirm if the emergency situation is still present. The request may be sent to the IVI, the TCU, or both. Upon reception of this request, the IVI or TCU (or both) may confirm or not the emergency situation. If the IVI/TCU confirms, of if the user device does not receive anything from the IVI/TCU, the user device, the user device performs the backup emergency communication. If the IVI/TCU notifies the user device that the emergency is not present anymore, the user device does not perform the communication.

The performing, by the user device, of the backup emergency communication may further comprise displaying, on the user device and on the IVI unit, a backup emergency communication starting notification. The user device is configured for cancelling the backup emergency communication upon request of a vehicle passenger afterdisplay of the backup emergency communication starting notification on the IVI unit and the user device. The user of the vehicle may for example click on (our touch) a cancel button displayed on a display of the IVI and/or of the user device to cancel the backup emergency communication or may alternatively cancel the communication using voice command.

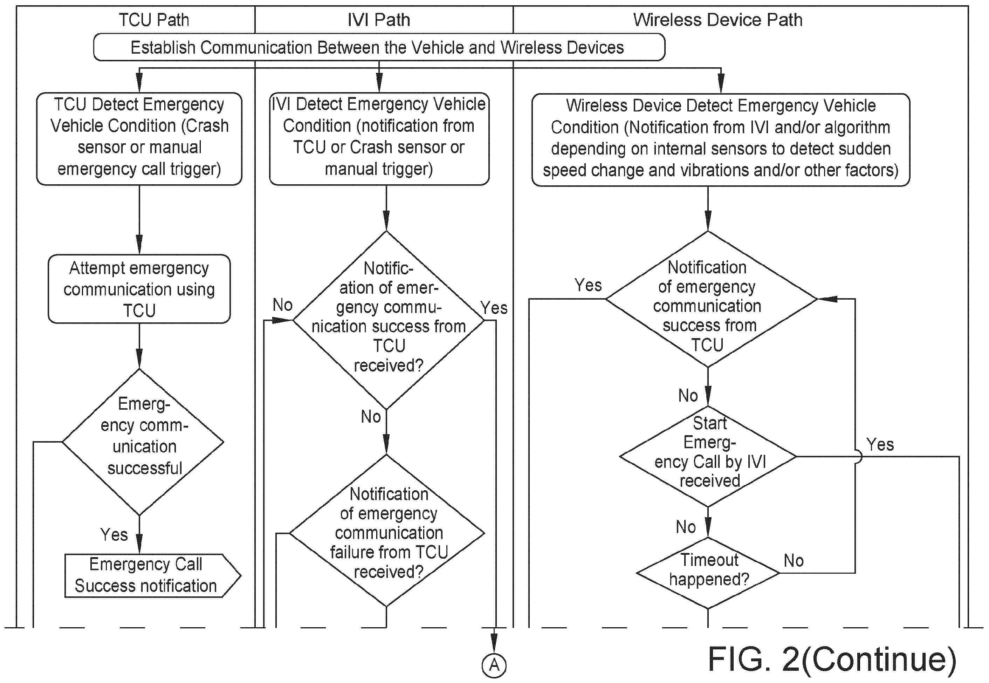

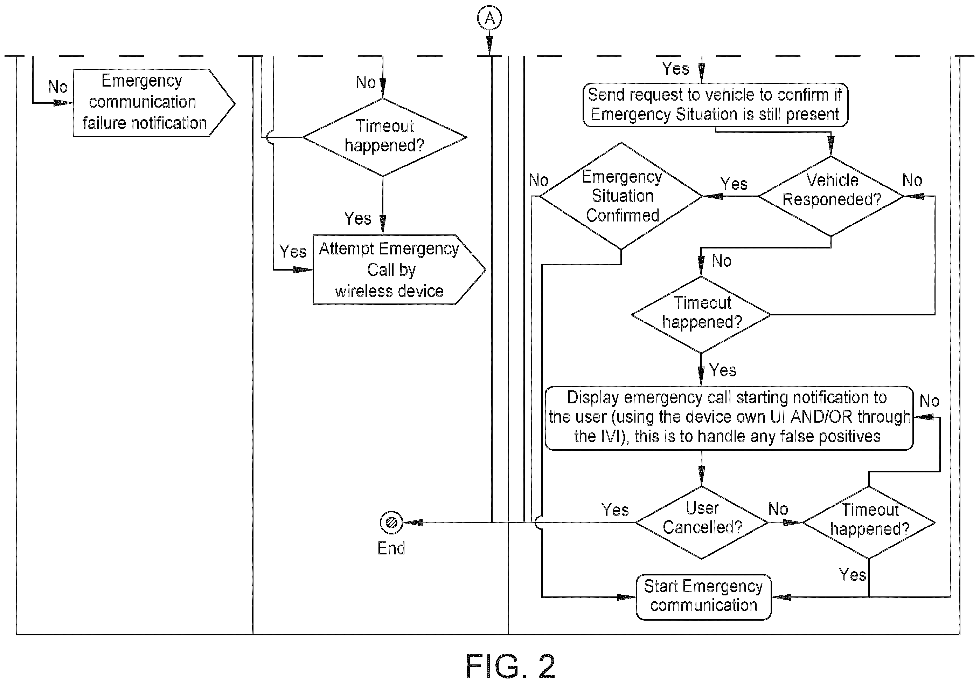

FIG. 2 shows a flowchart of implementations of the method.

The method is computer-implemented. This means that steps (or substantially all the steps) of the method are executed by at least one computer, or any system alike. Thus, steps of the method are performed by the at least one computer, possibly fully automatically, or, semi-automatically. In examples, the triggering of at least some of the steps of the method may be performed through user-computer interaction (for example, cancelling the backup communication). The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory, the memory having recorded thereon a computer program comprising instructions for performing the method. The memory may also store a database. The memory is any hardware adapted for such storage, possibly comprising several physical distinct parts (e.g. one for the program, and possibly one for the database).

In specific, some steps of the method are performed by the IVI unit, some by the TCU (detection of emergency, making the emergency communication, sending notification of failure/success to the IVI) which both include a respective internal computer system as described above, and the other steps are performed by the user device, which also include an internal computer system as described above. The IVI and the user device may each comprise a display/graphical user interface coupled to their respective internal processors. The IVI and the TCU may be coupled to sensors as described above, these sensors being coupled to the respective internal processors of the IVI and TCU. The user device may comprise its own sensors as described above, and they may be coupled to the internal processor of the user device. The IVI performs the steps of determining whether the TCU made an emergency communication and of triggering the backup emergency communication, and, more generally, any step described above as being performed by the IVI. The user device performs the steps of determining whether the TCU made the emergency communication or whether the IVI unit triggered the backup emergency communication and of performing the backup emergency communication, and, more generally, any step described above as being performed by the user device. The TCU performed any step described above as being performed by the TCU.

Each of the TCU, IVI and user device comprises a respective computer program stored on its respective memory, the respective computer program causing the TCU, IVI, or user device (whichever is respective to that computer program) to perform the method steps that the TCU, IVI, or user device performs.

Each computer program may comprise instructions executable by a computer, the instructions comprising means for causing the above system to perform the steps of method performed by the device storing that computer program. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1. A computer-implemented method for making an emergency communication in a vehicle, the method comprising:
- by an In-vehicle Infotainment (IVI) unit of the vehicle, determining whether a Telematic Contril Unit (TCU) of the vehicle made an emergency communication upon detection of an emergency of the vehicle, wherein the TCU and the IVI unit are both configured for detection of the emergency; and
- if the IVI unit determines that the TCU did not make an emergency communication upon detection of the emergency, triggering, by the IVI, a backup emergency communication.

2. The method of claim 1, wherein the determining, by the IVI unit, of whether the TCU of the vehicle made the emergency communication comprises:
- determining whether a notification of emergency communication success from the TCU or a notification of emergency communication failure from the TCU has been received by the IVI unit.

3. The method of claim 1 or 2, wherein the triggering, by the IVI, of the backup emergency communication takes place after a timeout upon determination that the TCU did not make the emergency communication.

4. The method of claim 1, 2 or 3, wherein the triggering, by the IVI unit, of the backup emergency communication comprises:
- by the IVI unit, performing the backup emergency communication; or
- by the IVI unit, sending instructions to a user device connected to the IVI unit, the instructions causing the user device to perform the backup emergency communication.

5. The method of claim 4, wherein the method further comprises:
- by the user device, determining whether the TCU made the emergency communication or whether the IVI unit triggered the backup emergency communication; and
- if the user device determines that the TCU did not make the emergency communication and that the IVI unit did not make the backup emergency communication, performing, by the user device, the backup emergency communication, wherein the user device is configured to detect on its own the emergency.

6. The method of claim 5, wherein the determining, by the user device, of whether the TCU made the emergency call or whether the IVI unit triggered the backup emergency call comprises:
- determining whether a notification of emergency communication success from the TCU has been received by the user device; and
- determining whether instructions from the IVI unit to perform the backup emergency communication have been received by the user device.

7. The method of claim 5 or 6, wherein the performing, by the user device, of the backup emergency communication takes place after a timeout upon determination that the TCU did not make the emergency communication and that the IVI unit did not make the backup emergency communication.

8. The method of claim 7, wherein the determining, by the user device, of whether the TCU made the emergency call or whether the IVI unit triggered the backup emergency call further comprises, after the timeout, by the user device and prior to performing the backup emergency communication, sending a request to the vehicle to confirm if the emergency situation is still present.

9. The method of any one of claims 4 to 8, wherein the performing, by the user device, of the backup emergency communication further comprises displaying, on the user device and on the IVI unit, a backup emergency communication starting notification, wherein the user device is configured for cancelling the backup emergency communication upon request of a vehicle passenger after display of the backup emergency communication starting notification on the IVI unit and the user device.

10. A computer program comprising instructions which, when executed by an IVI unit of a vehicle, cause the IVI to perform the steps of determining whether the TCU made an emergency communication and of triggering the backup emergency communication according to the method of any one of claims 1 to 9.

11. A computer program comprising instructions which, when executed by a user device connected to an IVI unit of a vehicle, cause the user device to perform the steps of determining whether the TCU made the emergency communication or whether the IVI unit triggered the backup emergency communication and of performing the backup emergency communication according to the method of any one of claims 4 to 9.

12. A computer-readable data storage medium having recorded thereon the computer program of claim 10.

13. A computer-readable data storage medium having recorded thereon the computer program of claim 11.

14. A vehicle IVI unit comprising a processor and a memory, the memory having recorded thereon the computer program of claim 10.

15. A user device connectable to a vehicle IVI unit according to claim 14, the user device comprising a processor and a memory, the memory having recorded thereon the computer program of claim 11.
